# EUROPÄISCHE PATENTSCHRIFT

(11) **EP 3 033 532 B1**
(45) Veröffentlichungstag und Bekanntmachung des Hinweises auf die Patenterteilung: **23.08.2017**
(21) Anmeldenummer: 14741831.3
(22) Anmeldetag: 11.07.2014
(51) Int. Cl.: F16B 15/06, F16B 19/14

(54) **VERBINDUNGSELEMENT, VERWENDUNG UND VERFAHREN**
CONNECTING ELEMENT, USE AND METHOD
ÉLÉMENT DE LIAISON, UTILISATION ET PROCÉDÉ

(30) Priorität: 12.08.2013 DE 102013215941
(43) Veröffentlichungstag der Anmeldung: 22.06.2016
(73) Patentinhaber: Arnold Umformtechnik GmbH & Co. KG, 74670 Forchtenberg-Ernsbach (DE)
(72) Erfinder: MILLER, Heiko, 74613 Öhringen (DE); FRÖHLICH, Dominik, 74639 Zweiflingen (DE)
(74) Vertreter: Patentanwälte Ruff, Wilhelm, Beier, Dauster & Partner mbB
(86) Internationale Anmeldenummer: PCT/EP2014/064916
(87) Internationale Veröffentlichungsnummer: WO 2015/022124

(56) Entgegenhaltungen:
- DE-A1-102007 033 126
- DE-A1-102011 109 815

## Beschreibung

Die Erfindung betrifft ein Verbindungselement zum spanlosen Verbinden mindestens zweier Werkstücke miteinander, die Verwendung eines solchen Verbindungselements und ein Verfahren zum Verbinden mindestens zweier Werkstücke mithilfe eines Verbindungselements.

Es ist bereits ein Verbindungselement zum spanlosen Verbinden zweier Werkstücke bekannt. Das Verbindungselement enthält einen Schaft mit einer Vielzahl paralleler zwischen sich Rillen bildender Ringvorsprünge, die in einer senkrecht zur Längsachse des Verbindungselements verlaufenden Ebene liegen. Das Verbindungselement wird durch Druck und Drehung durch die Bauteile eingetrieben, so dass eine Verbindung durch Reibschweißen entsteht (DE 10 2011 014 870 A1).

Weiterhin ist ein Verbindungselement zur Verbindung zweier Werkstücke bekannt, das an einem Schaft eine Vielzahl von umlaufenden schräg zur Längsachse und parallel zueinander verlaufenden Ringvorsprüngen mit konstanten Abstand aufweist (DE 10 2011 109 815 A1). Dieses Verbindungselement wird unter Druck- und Rotationsbeaufschlagung eingetrieben, um durch ein Reibungserhitzen und eine lokale Verformung der Bauteilwerkstoffe eine feste Verbindung herzustellen.

Ebenfalls bekannt ist ein Nagel mit einem Nagelkopf und einem Nagelschaft, der eine Oberflächenprofilierung in Form umlaufender Ringe aufweist. Der Nagel wird mit hoher Geschwindigkeit durch nicht vorgelochte Bauteile eingetrieben (DE 10 2007 033 126 A1).

Der Erfindung liegt die Aufgabe zu Grunde, ein Verbindungselement zu schaffen, das sich einfach montieren lässt und hohe Anforderungen an die Verbindungssicherheit gewährleistet.

Zur Lösung dieser Aufgabe schlägt die Erfindung ein Verbindungselement mit den in Anspruch 1 genannten Merkmalen, die Verwendung dieses Verbindungselements zum Verbinden zweier Werkstücke und ein Verfahren vor. Weiterbildungen der Erfindung sind Gegenstand der jeweiligen abhängigen Patentansprüche.

Das Verbindungselement enthält also einen Schaft mit einem Verbindungselementkopf mit einer Drehantriebsausbildung an seinem einen Ende. Der Schaft hat ein weiteres, vorderes Ende. Der Schaft enthält mindestens ein Paar umlaufender Ringvorsprünge, vorzugsweise mehrere derartige Paare. Mindestens ein Ringvorsprung eines solchen Paares liegt nicht in einer Querebene des Schafts, die senkrecht zu der Längsachse des Schafts angeordnet ist. Der Abstand zwischen zwei benachbarten ein Paar bildenden Ringvorsprüngen ist längs des Umfangs des Schafts nicht konstant, sondern unterschiedlich groß oder beide Ringvorsprünge eines Paares sind parallel zueinander angeordnet.

Insbesondere kann in Weiterbildung der Erfindung vorgesehen sein, dass die Ringvorsprünge eines Paars derart angeordnet bzw. ausgebildet sind, dass der Abstand zwischen ihnen über einen Winkel von 90° kontinuierlich zunimmt bzw. abnimmt. Dann kann eine Verdrehung des Verbindungselements nach erfolgter Anlage des Verbindungselementkopfs an dem äußeren Werkstück um 90° erfolgen, um das Verbindungselement zu verriegeln.

Es ist ebenfalls möglich und wird von der Erfindung vorgeschlagen, dass die Ringvorsprünge derart angeordnet sind, dass der Abstand zwischen ihnen über einen Winkel von 180° kontinuierlich zunimmt bzw. abnimmt. In diesem Fall kann zur Verriegelung des Verbindungselements eine Verdrehung um 180° dienen.

Andere Arten der Ausbildung der Ringvorsprünge sind ebenfalls möglich.

Das Verbindungselement kann beispielsweise dazu dienen, mehrere Werkstücke miteinander zu verbinden, die bereits eine Öffnung in Form eines Lochs aufweisen, so dass das Verbindungselement in die deckungsgleich angeordneten Löcher eingetrieben wird. Für einen solchen Fall kann es ausreichen, dass das vordere Ende des Schafts des Verbindungselements stumpf ausgebildet ist, gegebenenfalls mit einer leichten Phase des vorderen Endes.

Das Verbindungselement kann aber auch dazu dienen, mehrere Werkstücke miteinander zu verbinden, von denen das untere Werkstück ungelocht ist, gegebenenfalls auch beide Werkstücke ungelocht sind. Für einen solchen Fall kann erfindungsgemäß vorgesehen sein, dass das vordere Ende des Schafts eine Spitze aufweist, die gegebenenfalls leicht abgerundet ist, insbesondere eine ballistische Spitze. Damit dient das Verbindungselement dann auch dazu, durch eine Vorwärtsbewegung ein Loch herzustellen, das insbesondere mit einem Durchzug versehen wird.

Nach einem weiteren Merkmal der Erfindung kann vorgesehen sein, dass sich an das vordere Ende des Schafts eine Kalibrierzone anschließt, die dazu dient, dem Loch eine korrekte Form und Größe zu verleihen.

In weiterer Ausgestaltung der Erfindung kann der Schaft eine Ansetzzone aufweisen, die beispielsweise hinter der Kalibrierzone angeordnet sein kann. Die Aufgabe dieser Ansetzzone besteht darin, gegebenenfalls eine Ausrichtung des Verbindungselements gegenüber dem Werkstück durchzuführen, damit das Verbindungselement exakt senkrecht zur Oberfläche des Werkstücks ausgerichtet wird.

Innerhalb der Ansetzzone können in Weiterbildung der Erfindung umlaufende Rippen vorhanden sein, die alle in einer senkrecht zur Längsachse des Verbindungselements verlaufenden Ebene liegen. Ein Zwischenraum zwischen diesen Vorsprüngen, falls er vorhanden ist, kann überall die gleiche Größe aufweisen. Die Vorsprünge innerhalb der Ansetzzone sind normalerweise bei einer durchgeführten Verbindung zwischen den beiden Werkstücken so positioniert, dass sie an der Verbindung selbst nicht mehr mitwirken.

Der Schaft des Verbindungselements kann einen kreisrunden Querschnitt aufweisen, ebenso der Außenumfang der Ringvorsprünge.

Es ist aber ebenfalls möglich und wird von der Erfindung vorgeschlagen, dass der Schaftquerschnitt abgerundet polygonal, insbesondere trilobular, ausgebildet ist.

Ebenfalls möglich ist es, dass der Schaftquerschnitt in einem Bereich kreisrund und in einem anderen Bereich abgerundet polygonal ausgebildet ist.

Insbesondere kann vorgesehen sein, dass der Schaftquerschnitt im Halteabschnitt kreisrund und im Bereich des vorderen Schaftendes polygonal ausgebildet ist.

Es kann vorgesehen sein, dass der Schaft zylindrisch ausgebildet ist, insbesondere dann, wenn das Verbindungselement für die Verbindung gelochter Werkstücke vorgesehen ist.

Es ist ebenfalls möglich, dass der Schaft konisch ausgebildet ist.

Eine Kombination aus beiden Formen in der Weise, dass der Halteabschnitt zylindrisch und der Bereich zwischen dem vorderen Schaftende und dem Halteabschnitt konisch ist, wird von der Erfindung ebenfalls vorgeschlagen.

Nach einem weiteren Merkmal der Erfindung kann vorgesehen sein, dass mindestens ein Ringvorsprung des Paars von Ringvorsprüngen in einer senkrecht zur Längsachse des Verbindungselements verlaufenden Ebene liegt.

In weiterer Ausgestaltung der Erfindung kann vorgesehen sein, dass mindestens ein Ringvorsprung in einer schräg zur Längsachse des Verbindungselements verlaufenden Ebene liegt.

Es kann ebenfalls vorgesehen sein und wird von der Erfindung vorgeschlagen, dass mindestens ein Ringvorsprung wellenförmig ausgebildet ist.

In nochmaliger Weiterbildung der Erfindung kann mindestens ein Ringvorsprung zwei oder mehr stufenartig versetzte Teile aufweisen, die gegebenenfalls in einer senkrecht zur Längsachse des Befestigungselements verlaufenden Ebene liegen.

Bei dem Profil eines Ringvorsprungs kann vorgesehen sein, dass der Ringvorsprung mindestens im Halteabschnitt verrundet ausgebildet ist.

Eine weitere von der Erfindung vorgeschlagene Möglichkeit besteht darin, dass das Flankenprofil mindestens eines Ringvorsprungs im Halteabschnitt symmetrisch ausgebildet ist.

Es ist aber auch möglich, dass das Flankenprofil mindestens eines Ringvorsprungs im Halteabschnitt unsymmetrisch ausgebildet ist, wobei die flachere Flanke in Richtung auf das vordere Schraubenende zeigt, um das Eintreiben des Verbindungselements zu erleichtern.

Eine weitere Möglichkeit besteht darin, dass bei einem unsymmetrischen Flankenprofil die dem Verbindungselementkopf zugewandte Flanke fast senkrecht zur Längsachse des Verbindungselements verläuft.

Die verschiedenen Ausgestaltungen des Flankenprofils im Halteabschnitt können auch in der Kalibrierzone und/oder der Ansetzzone vorgesehen sein.

Die Erfindung schlägt ebenfalls die Verwendung eines Verbindungselementes, wie es hierin beschrieben wurde, zur Verbindung mindestens zweier Werkstücke miteinander vor, wobei das Verbindungselement durch axialen Druck bis zur Anlage der Unterseite des Verbindungselementkopfs an dem oberen Werkstück eingepresst und anschließend um einen Winkel von weniger als 360° verdreht wird.

Die Erfindung schlägt ebenfalls ein Verfahren zum Verbinden mehrerer Werkstücke vor, bei dem die Werkstücke aufeinandergelegt werden und ein Verbindungselement, wie es hierin beschrieben wurde, durch die Werkstücke hindurchgetrieben wird, bis die Unterseite des Verbindungselementkopfs an dem oberen der beiden Werkstücke zur Anlage gelangt. Anschließend wird das Verbindungselement um einen Winkel von beispielsweise weniger als 360° zur Verriegelung verdreht.

Falls das Werkstück, an dem das zweite Werkstück befestigt werden soll, im Verbindungsbereich bereits gelocht ist, kann es erfindungsgemäß ausreichen, wenn das Verbindungselement unter axialer Krafteinwirkung ausschließlich axial vorwärts geschoben wird, bis die Unterseite des Verbindungselementkopfs an dem zu befestigenden Werkstück anliegt. Anschließend erfolgt dann die Verdrehung zur Herstellung der Verriegelung.

Falls es sich dagegen um ein im Verbindungsbereich nicht gelochtes oder ein mit einem zu kleinen Loch versehenes Werkstück handelt, kann erfindungsgemäß das Verbindungselement unter hoher axialer Krafteinwirkung mit hoher Drehzahl rotiert werden, um auf diese Weise durch Wärmeeintrag das zu durchdringende Material zu plastifizieren. Auf diese Weise wird ein Loch mit einem Durchzug gebildet. Sobald dieses Loch gebildet ist, wird die Drehzahl reduziert, gegebenenfalls bis auf 0. Anschließend erfolgt wieder unter hoher Krafteinwirkung der Einpressvorgang und anschließend eine Verdrehung zum Verriegeln.

In Weiterbildung kann die Ansetzzone dazu verwendet werden, das Verbindungselement zentriert und leichtgängig einzupressen.

Weitere Merkmale, Einzelheiten und Vorzüge der Erfindung ergeben sich aus den Ansprüchen und der Zusammenfassung, deren beider Wortlaut durch Bezugnahme zum Inhalt der Beschreibung gemacht wird, der folgenden Beschreibung bevorzugter Ausführungsformen der Erfindung sowie anhand der Zeichnungen. Einzelmerkmale der unterschiedlichen Ausführungsformen können dabei in beliebiger Weise kombiniert werden, ohne den Rahmen der Erfindung zu überschreiten. In den Zeichnungen zeigen:
- Fig. 1: die teilweise geschnittene Seitenansicht eines Verbindungselements nach der Erfindung;
- Fig. 2: den Schaft eines Verbindungselements einer zweiten Ausführungsform;
- Fig. 3: eine der in Fig. 2 entsprechenden Darstellungen eines Verbindungselements einer dritten Ausführungsform;
- Fig. 4: den Querschnitt durch den Schaft eines Verbindungselements;
- Fig. 5: den Querschnitt durch den Schaft eines Verbindungselements;
- Fig. 6: schematisch die Querschnitte durch ein Verbindungselement an zwei verschiedenen Stellen;
- Fig. 7: einen Ausschnitt aus einem zylindrischen Schaft;
- Fig. 8: einen Ausschnitt aus einem konischen Schaft;
- Fig. 9: die Darstellung eines Schafts, der einen zylindrischen und einem konischen Abschnitt aufweist;
- Fig. 10: schematisch einen einzelnen Ringvorsprung;
- Fig. 11: die Abwicklung des Ringvorsprungs der Fig. 10;
- Fig. 12: die Darstellung eines zweiten Ringvorsprungs;
- Fig. 13: die Abwicklung des Ringvorsprungs der Fig. 11;
- Fig. 14: zwei Ringvorsprünge der in Fig. 12 dargestellten Art;
- Fig. 15: die Abwicklung der Ringvorsprünge der Fig. 14;
- Fig. 16: zwei Paare von Ringvorsprüngen;
- Fig. 17: die Abwicklung der Ringvorsprünge der Fig. 16;
- Fig. 18: zwei weitere Paare von Ringvorsprüngen;
- Fig. 19: die Abwicklung der Ringvorsprünge der Fig. 18;
- Fig. 20: ein Paar von Ringvorsprüngen;
- Fig. 21: die Abwicklung der Ringvorsprünge der Fig. 20;
- Fig. 22: zwei Paare von Ringvorsprüngen;
- Fig. 23: die Abwicklung der Ringvorsprünge der Fig. 22;
- Fig. 24: zwei Paare von Ringvorsprüngen;
- Fig. 25: die Abwicklung der Ringvorsprünge der Fig. 24;
- Fig. 26: ein Paar von stufenversetzten Ringvorsprüngen;
- Fig. 27: die Abwicklung der Ringvorsprünge der Fig. 26;
- Fig. 28a bis Fig. 28d: insgesamt vier Profile von Ringvorsprüngen;
- Fig. 29: schematisch eine Spitze eines Verbindungselements nach der Erfindung;
- Fig. 30: eine der in Fig. 29 entsprechende Darstellungen der Spitze eines Verbindungselements mit einer Kalibrierzone.

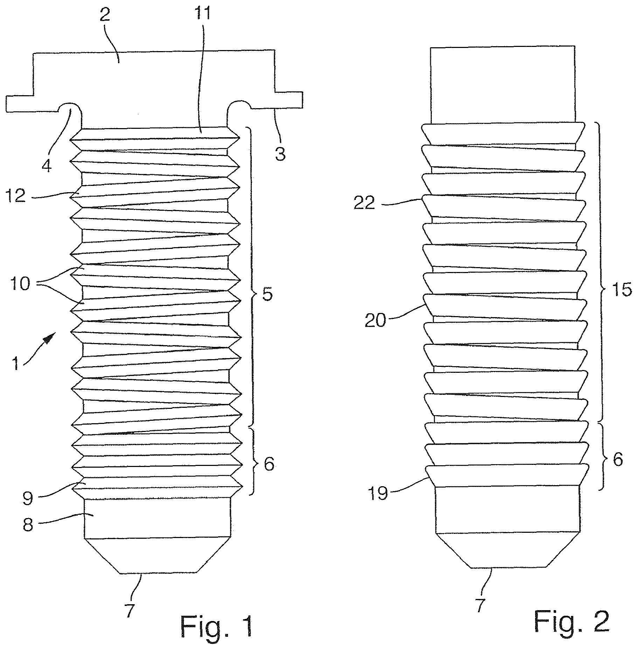

Die Fig. 1 zeigt eine teilweise geschnittene Seitenansicht eines Verbindungselements nach der Erfindung. Das Verbindungselement enthält einen Schaft 1, an dessen einen Ende ein Verbindungselementkopf 2 angeordnet ist. Der Kopf 2 steht radial über die Außenseite des Schafts 1 über, so dass er eine Unterseite 3 bildet. Diese Unterseite 3 ist zur Anlage an dem zu befestigenden Werkstück bestimmt. Unmittelbar am Schaft 1 enthält die Unterseite 3 eine Auskehlung 4, in die beim Herstellen der Verbindung aufgeworfenes Material eindringen kann. Der Verbindungselementkopf 2 enthält eine nicht dargestellte Drehantriebsausbildung, beispielsweise in Form eines äußeren Sechsecks oder einer anderen Antriebsausbildung. Die Ausbildung des Kopfs 4 ist im Wesentlichen beliebig und kann beispielsweise auch linsenförmig sein. Der Schaft 1 enthält einen sich an die Unterseite 3 des Kopfs 4 anschließenden Halteabschnitt 5, und eine sich daran anschließende Ansetzzone 6. Zwischen der Ansetzzone 6 und dem vorderen stumpfen Ende 7 des Schafts ist eine Kalibrierzone 8 ausgebildet, in der der Schaft einen konstanten Durchmesser aufweist. Die Kalibrierzone kann, muss aber nicht vorhanden sein. Der Bereich zwischen der Kalibrierzone 8 und dem Ende 7 des Schaftes ist kegelstumpfförmig ausgebildet.

Das in Fig. 1 dargestellte Verbindungselement ist zur Verbindung mindestens zweier Bleche oder Werkstücke bestimmt, von denen wenigstens das untere Blech bereits ein Loch aufweist, in das das Verbindungselement eingreifen kann.

In der Ansetzzone 6 weist der Schaft 1 insgesamt drei direkt aneinander anliegende umlaufende geschlossene Ringvorsprünge 9 auf, die ein symmetrisches Flankenprofil bilden. Diese Ringvorsprünge 9 liegen jeweils in einer senkrecht zur Längsachse des Verbindungselements verlaufenden Ebene. Es ist allgemein möglich, zwei oder mehr Ringvorsprünge vorzusehen und diese können auch ein asymmetrisches Flankenprofil bilden.

In dem Halteabschnitt 5, der von der Ansetzzone 6 bis zu der Unterseite 3 des Verbindungselementkopfs 2 reicht, enthält der Schaft eine Vielzahl von Ringvorsprüngen 10 mit dem gleichen Flankenprofil wie die Ringvorsprünge 9. Allerdings liegen alle Ringvorsprünge 10 mit Ausnahme des letzten Ringvorsprungs 11 jeweils in einer Ebene, die schräg zur Längsachse des Schafts 1 verläuft. Der Winkel, in dem die Ringvorsprünge schräg zur Längsachse angeordnet sind, beträgt etwa 87° bzw. 93° und kann typischerweise in einem Bereich zwischen -70° und 100° liegen. Dadurch ist zwischen je 2 benachbarten Ringvorsprüngen 10 ein Zwischenraum gebildet, wobei der Abstand zwischen den Kanten 12 der Ringvorsprünge 10 längs eines Umfangs über einen Winkel von 180° zunächst kontinuierlich zunimmt und dann über einen Winkel von ebenfalls 180° kontinuierlich abnimmt. Der letzte Ringvorsprung 11 kann ebenfalls schräg, wie die Ringvorsprünge 10, angeordnet sein.

Die Fig. 2 zeigt eine der Fig. 1 entsprechende Darstellung einer zweiten Ausführungsform, bei der zur vereinfachten Darstellung der Verbindungselementkopf 2 weggelassen ist. Wiederum sind in der Ansetzzone 6 insgesamt drei Ringvorsprünge 19 vorgesehen, die ohne Zwischenraum aneinander anliegen und senkrecht zur Längsachse verlaufen, wobei hier auch zwei oder mehrere Ringvorsprünge vorgesehen sein können.-Die Ringvorsprünge 19 haben ein asymmetrisches Flankenprofil, wobei die flachere Flanke in Richtung zu dem vorderen stumpfen Ende 7 des Schafts 1 gerichtet ist, während die steilere Flanke in Richtung auf den nicht dargestellten Verbindungselementkopf 2 gerichtet ist. Die steilere Flanke verläuft senkrecht zu der Längsachse.

In dem Halteabschnitt 15 sind die Ringvorsprünge 20 in der gleichen Weise orientiert wie bei der Ausführungsform der Fig. 1 die Ringvorsprünge 10, so dass der Abstand zwischen ihren Kanten 22 sich in der gleichen Weise ändert wie bei der Ausführungsform der Fig. 1. Auch hier haben die schräg verlaufenden Ringvorsprünge 20 in dem Halteabschnitt 15 das gleiche Flankenprofil wie die Ringvorsprünge 9 in der Ansetzzone 6.

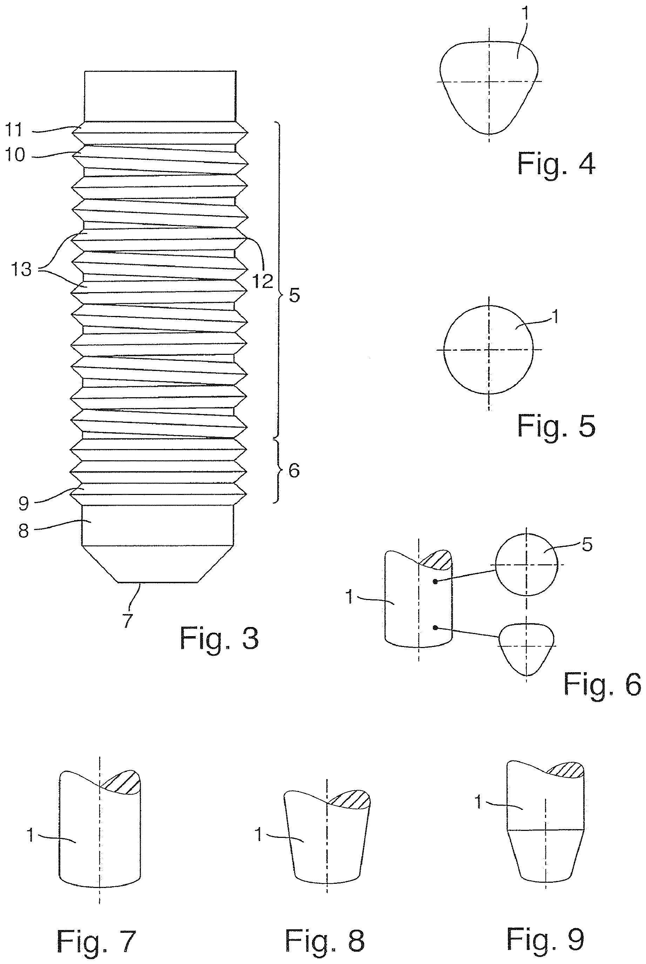

Die Fig. 3 zeigt eine dritte Ausführungsform, bei der ebenfalls zur vereinfachten Darstellung der Verbindungselementkopf 2 weggelassen ist. Die Kalibrierzone 8 und die Ansetzzone 6 sind identisch wie bei der Ausführungsform der Fig. 1. In dem Halteabschnitt 5 gibt es schräg verlaufende Ringvorsprünge 10 wie bei der Ausführungsform der Fig. 1, und zwischen je zwei schräg verlaufenden Ringvorsprüngen 10 gibt es dann in jeweils einer senkrecht zur Längsachse verlaufenden Ebene angeordnete Ringvorsprünge 13. Auch hier ist der Abstand zwischen den Kanten 12 jeweils zweier benachbarter Ringvorsprünge 10,13 so beschaffen, dass er in Umfangsrichtung über einen Bereich von 180° zunimmt und anschließend über einen gleichen Bereich von 180° wieder abnimmt.

Die Fig. 4 zeigt einen möglichen Querschnitt durch den Schaft 1 eines Verbindungselements nach der Erfindung. Der Querschnitt kann die Form eines Dreiecks mit abgerundeten Ecken und abgerundeten Seiten aufweisen, eine Form, die auch als trilobular bezeichnet wird. Dies ist in Fig. 4 dargestellt.

Der Querschnitt kann auch die Form eines Kreises aufweisen, wie dies in Fig. 5 dargestellt ist.

Fig. 6 zeigt eine Möglichkeit, wie ein Schaft 1 ausgebildet sein kann, der nämlich in dem näher zum Verbindungselementkopf 2 liegenden Halteabschnitt 5 einen kreisrunden Querschnitt aufweist und in dem näher zur Spitze angeordneten Bereich, beispielsweise der Kalibrierzone 8, einen der Fig. 4 entsprechenden abgerundet polygonalen Querschnitt aufweist.

Während die Fig. 4 bis Fig. 6 sich mit dem Querschnitt des Schafts 1 befassen, zeigen die Fig. 7 bis 9 unterschiedliche Möglichkeiten der Ausbildung des Schafts in Längsrichtung. Fig. 7 soll andeuten, dass der Schaft insgesamt zylindrisch ausgebildet ist, während die Fig. 8 andeuten soll, dass der Schaft die Form eines Kegelstumpfs aufweist.

Fig. 9 zeigt nun einen Schaft, der über einen größeren Teil zylindrisch ausgebildet ist, beispielsweise im Halteabschnitt 5 und der Ansetzzone 6, während er im vorderen, näher zur Spitze gelegenen Bereich konisch ist.

Die folgenden Figuren befassen sich nun mit den einzelnen Ringvorsprüngen, wobei hier zunächst nur einzelne Ringvorsprünge dargestellt sind, während der Schaft die Ringvorsprünge immer paarweise enthält, vorzugsweise in mehreren Paaren.

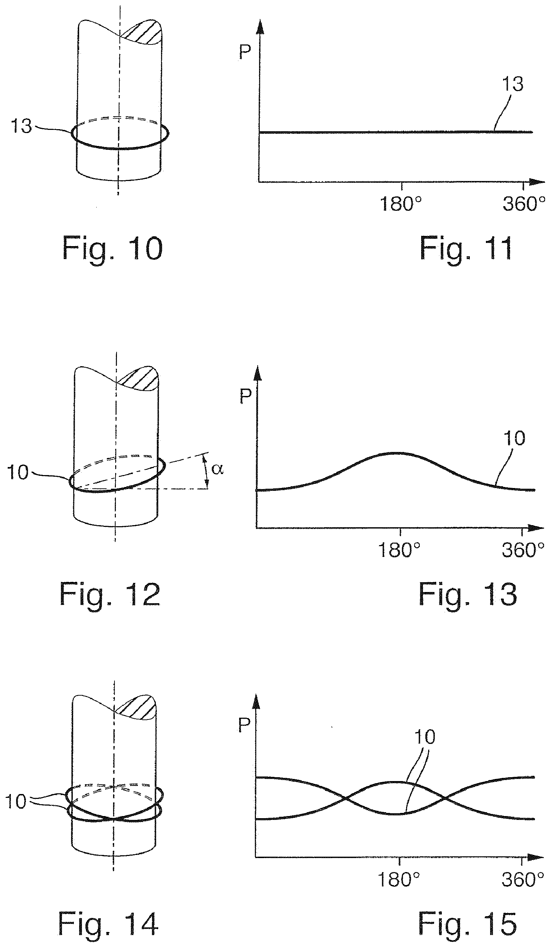

Die Fig. 10 zeigt eine schematische Darstellung eines Schafts mit einem einzelnen Ringvorsprung 13, also einem Ringvorsprung, der in einer senkrecht zur Längsachse des Schafts verlaufenden Ebene liegt, siehe Fig. 3. Fig. 11 zeigt die Abwicklung eines solchen Ringvorsprungs, wobei die Abszisse den Umfang des Schafts in Winkelgraden darstellt und die Ordinate den Abstand des Ringvorsprungs von dem Schaftende.

Die Fig. 12 zeigt dementsprechend einen Schaft 1 mit einem Ringvorsprung 10, wie er in Fig. 1 und Fig. 3 dargestellt ist. Dieser Ringvorsprung 10 verläuft in einer Ebene, die unter dem angegebenen Winkel 2 schräg verläuft. Die Der Winkel 2 kann typischerweise in einem Bereich zwischen 2° und 10° liegen. Die Abwicklung der Fig. 13 zeigt einen wellenförmigen Verlauf.

Fig. 14 zeigt eine weitere Möglichkeit der Anordnung von Ringvorsprüngen, wobei sich in diesem Fall die beiden Ringvorsprünge 10 kreuzen.

Das gleiche gilt für die Abwicklung der beiden Ringvorsprünge in Fig. 15.

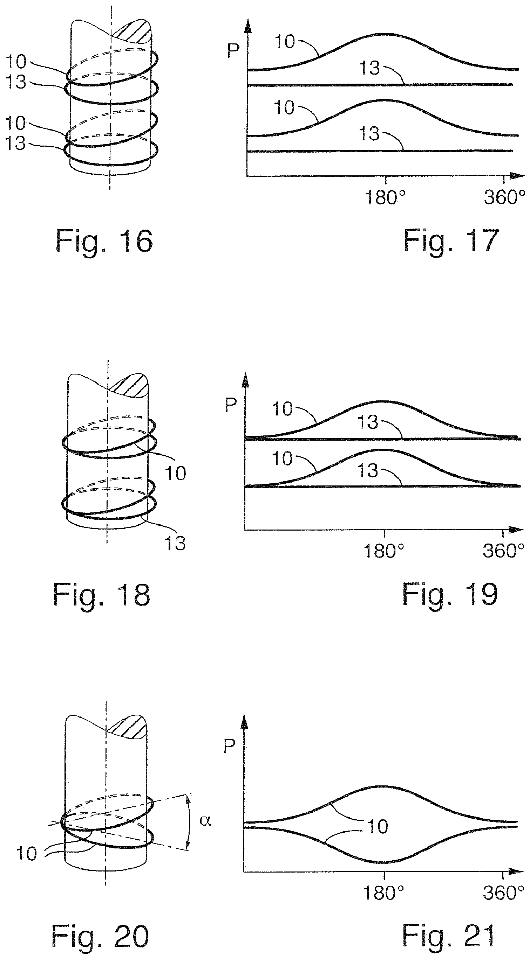

In Fig. 16 sind an dem Schaft zwei Paare von Ringvorsprüngen 10,13 eingezeichnet, von denen die Ringvorsprünge 10 schräg verlaufen, während die Ringvorsprünge 13 in einer Querebene zur Längsachse verlaufen. Die beiden ein Paar bildenden Ringvorsprünge 10, 13 weisen überall einen Abstand auf, der sich über einen Winkel von 360° kontinuierlich ändert, speziell bis 180° zunimmt und danach wieder abnimmt.

Die Ausführung der Fig. 18 bzw. 19 unterscheidet sich von den Fig. 16 und 17 nur darin, dass die beiden Ringvorsprünge 10, 13 jedes Paars von Ringvorsprüngen sich an einer Stelle berühren, so dass ihr gegenseitiger Abstand an dieser Stelle 0 ist.

Die Ausführung der Fig. 20 und 21 entspricht in etwa der Fig. 1, da hier beide Ringvorsprünge 10 schräg zur Längsachse verlaufen.

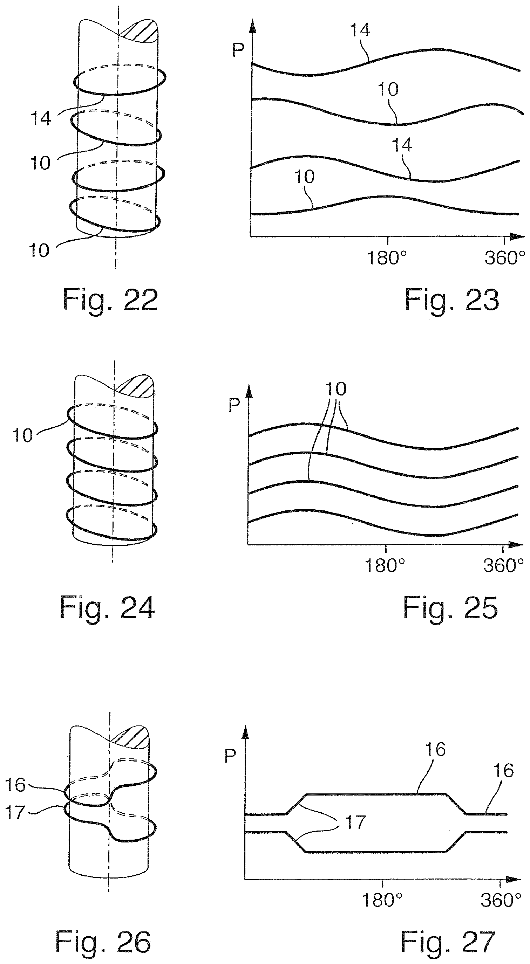

In der Ausführungsform der Fig. 22 und 23 sind mehrere Ringvorsprünge miteinander kombiniert, nämlich schräg in einer Ebene verlaufende Ringvorsprünge 10, 14 die jeweils um 90° auf dem Umfang versetzt sind. Auch hierdurch ändert sich der Abstand zwischen den Kanten 12 benachbarter Ringvorsprünge über den Umfang des Schafts. Die Anzahl und der Winkelgrad des Versatzes kann variieren. Je mehr Ringvorsprünge 10, 14 vorhanden sind, desto größer ist der Versatz.

Bei der Ausführungsform der Fig. 24 und 25 verlaufen alle Ringvorsprünge 10 schräg und parallel zueinander.

Die Fig. 26 und 27 zeigen schematisch eine Ausführungsform, bei der zwei Ringvorsprünge 16 vorhanden sind, die jeweils zwei durch eine Stufe 17 getrennte Teile aufweisen, die ihrerseits wieder in einer Querebene liegen. Auch dadurch wird erreicht, dass der Abstand der Kanten 12 benachbarter Ringvorsprünge längs eines Umfangs sich ändert.

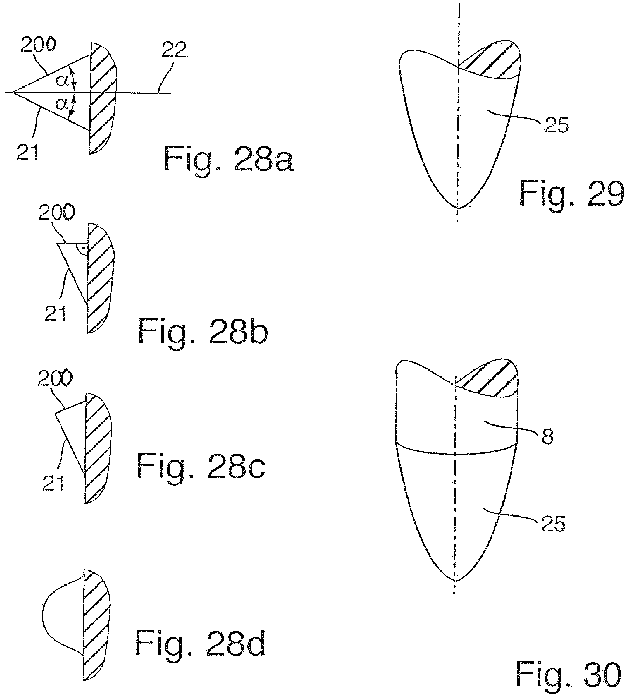

Schon bei dem Vergleich der Fig. 1 und 2 wurde darauf hingewiesen, dass die Ringvorsprünge unterschiedliche Flankenprofile aufweisen können. Dies wird anhand der Fig. 28a bis 28d nochmals dargestellt. Die Fig. 28a zeigt einen Ringvorsprung im Querschnitt, der ein symmetrisches Dreieck bildet. Eine Flanke 200 zeigt in Richtung auf den Verbindungselementkopf 2, und die andere Flanke 21 des Ringvorsprungs zeigt in Richtung auf das vordere Ende 7 des Schafts. Beide Flanken 20,21 verlaufen unter dem gleichen Winkel gegenüber der angedeuteten Querebene 22, also einer Ebene, die senkrecht zur Längsachse des Verbindungselements verläuft.

Die Fig. 28b zeigt ebenfalls einen Querschnitt durch einen Ringvorsprung, der ein in diesem Fall unsymmetrisches Dreieck bildet. Die in Richtung auf den Verbindungselementkopf zeigende Flanke 200 verläuft hier senkrecht zur Längsachse, während die gegenüberliegende Flanke 21 mit der Längsachse einen spitzen Winkel bildet. Diese Form des Querschnitts erleichtert das Eindringen des Verbindungselements in ein Werkstück.

Die Fig. 28c zeigt einen ähnlichen Querschnitt, wobei in diesem Fall die zum Kopf 2 zeigende Flanke 200 ebenfalls schräg verläuft.

Die letzte Teilfigur 28d zeigt einen Querschnitt durch einen Ringvorsprung, der abgerundet ausgebildet ist, und fast die Form eines Halbkreises aufweist. Auch hier kann die Querschnittsform unsymmetrisch sein.

Die Ausführungsform nach den Fig. 1 bis 3 zeigen jeweils ein Verbindungselement, das zur Verbindung zweier Werkstücke gedacht ist, die beide gelocht sind oder von denen wenigstens eines gelocht ist. Das Verbindungselement muss daher kein Loch bilden, sondern allenfalls ein vorhandenes Loch mit einer Kalibrierzone 8 kalibrieren.

Wenn ein Verbindungselement zur Verbindung von Werkstücken dienen soll, von denen das untere Werkstück nicht gelocht ist oder beide Werkstücke nicht gelocht sind, muss das vordere Schaftende entsprechend modifiziert werden. Ein solches vorderes Schaftende mit einer ballistischen Spitze 25 ist in Fig. 29 dargestellt.

Auch bei einer ballistischen Spitze 25, die zum Herstellen des Lochs durch Fließlochformen dient, kann eine Kalibrierzone 8 angeordnet sein, die zwischen der ballistischen Spitze 25 und der Ansetzzone 6 positioniert ist.

## Patentansprüche

1. Verbindungselement zur Verbindung mindestens zweier Werkstücke miteinander, mit
- einem Schaft (1),
- einem radial über die Außenseite des Schafts (1) hinausragenden Verbindungselementkopf (2) an dem einen Ende des Schafts (1),
- einer Drehantriebsausbildung an dem Verbindungselementkopf (2) und
- einem vorderen Schaftende (7), wobei
- in einem von der Unterseite (3) des Verbindungselementkopfs (2) ausgehenden Halteabschnitt (5, 15) des Schafts (1) an diesem mindestens ein Paar geschlossener Ringvorsprünge (10, 11, 13, 20) angeordnet ist, von denen
- mindestens ein Ringvorsprung (10, 14, 16) nicht vollständig in einer senkrecht zur Längsachse des Schafts (1) verlaufenden Ebene angeordnet ist, und
- der Abstand zwischen den beiden Ringvorsprüngen (10, 11, 13, 14, 16, 20) des Paars längs des Umfangs unterschiedlich groß ist oder beide Ringvorsprünge (19) des Paars von Ringvorsprüngen parallel zueinander angeordnet sind.

2. Verbindungselement nach Anspruch 1, bei dem das vordere Ende (7) des Schafts (1) stumpf ausgebildet ist.

3. Verbindungselement nach Anspruch 1, bei dem das vordere Ende des Schafts (1) zulaufend ausgebildet ist, insbesondere als ballistische gegebenenfalls abgerundete Spitze (25).

4. Verbindungselement nach Anspruch 2 oder 3, bei dem sich an das vordere Ende des Schafts (1) eine Kalibrierzone (8) anschließt.

5. Verbindungselement nach einem der vorhergehenden Ansprüche, bei dem der Schaft (1) eine Ansetzzone (6) aufweist.

6. Verbindungselement nach einem der vorhergehenden Ansprüche, bei dem der Schaftquerschnitt kreisrund und/oder polygonal ausgebildet ist, wobei bei einer Kombination aus kreisrund und polygonal der Halteabschnitt (5, 15) den kreisrunden Querschnitt aufweist.

7. Verbindungselement nach einem der vorhergehenden Ansprüche, bei dem der Schaft (1) zylindrisch und/oder konisch ausgebildet ist, wobei bei einer Kombination aus zylindrisch und konisch der Halteabschnitt (5, 15) zylindrisch ausgebildet ist.

8. Verbindungselement nach einem der vorhergehenden Ansprüche, bei dem mindestens ein Ringvorsprung (9, 13, 20) in einer senkrecht zur Längsachse des Verbindungselements verlaufenden Ebene liegt.

9. Verbindungselement nach einem der vorhergehenden Ansprüche, bei dem mindestens ein Ringvorsprung (10) in einer schräg zur Längsachse des Verbindungselements verlaufenden Ebene liegt.

10. Verbindungselement nach einem der vorhergehenden Ansprüche, bei dem mindestens ein Ringvorsprung (14) wellenförmig ausgebildet ist.

11. Verbindungselement nach einem der vorhergehenden Ansprüche, bei dem mindestens ein Ringvorsprung (16) zwei stufenartig versetzte Teile aufweist, die insbesondere jeweils in einer senkrecht zur Längsachse des Befestigungselements verlaufenden Ebene liegen.

12. Verbindungselement nach einem der vorhergehenden Ansprüche, bei dem das Flankenprofil mindestens eines Ringvorsprungs im Halteabschnitt symmetrisch ausgebildet ist.

13. Verbindungselement nach einem der vorhergehenden Ansprüche, bei dem das Flankenprofil mindestens eines Ringvorsprungs im Halteabschnitt unsymmetrisch ausgebildet ist, wobei vorzugsweise die dem Verbindungselementkopf (2) zugewandte Flanke (20) näher an einer Querebene zur Längsachse des Verbindungselements liegt.

14. Verbindungselement nach einem der vorhergehenden Ansprüche, bei dem das Flankenprofil mindestens eines Ringvorsprungs im Halteabschnitt einen verrundeten Querschnitt aufweist.

15. Verwendung eines Verbindungselements nach einem der vorhergehenden Ansprüche zur Verbindung mindestens zweier Werkstücke miteinander durch axiales Einschieben des Verbindungselements bis zur Anlage der Unterseite (3) des Verbindungselementkopfs (2) und anschließendes Verdrehen zur Verriegelung.

16. Verfahren zum Verbinden mindestens zweier Werkstücke miteinander, bei dem die Werkstücke aufeinandergelegt und ein Verbindungselement nach einem der Ansprüche 1 bis 14 axial eingeschoben wird, bis die Unterseite (3) des Verbindungselementkopfs (2) an dem äußeren Werkstück anliegt, wonach das Befestigungselement zur Verriegelung verdreht wird.

17. Verfahren nach Anspruch 16, bei dem zur Verbindung mit einem im Verbindungsbereich gelochten Werkstück das Verbindungselement bis zum Anliegen des Verbindungselementkopfs (2) axial eingeschoben und anschließend zur Verriegelung verdreht wird.

18. Verfahren nach Anspruch 16, bei dem zur Verbindung mit einem im Verbindungsbereich ungelochten Werkstück das Verbindungselement unter axialer Anpresskraft und hoher Drehzahl rotiert wird, bis ein Loch und gegebenenfalls ein Durchzug erzeugt ist, und anschließend unter Reduzierung der Drehzahl bis zum Anliegen des Verbindungselementkopfs (2) an dem Werkstück axial eingepresst und anschließend zur Verriegelung verdreht wird.

## Claims

1. Connecting element for connecting at least two workpieces to one another, having
- a shank (1),
- a connecting element head (2) at one end of the shank (1), said head projecting radially beyond the outside of the shank (1),
- a rotary driving formation on the connecting element head (2), and
- a front shank end (7), wherein
- at least one pair of closed annular projections (10, 11, 13, 20) is arranged on the shank (1) in a holding portion (5, 15) of the shank (1) which starts from the underside (3) of the connecting element head (2), of which projections
- at least one annular projection (10, 14, 16) is not arranged fully in a plane extending perpendicularly to the longitudinal axis of the shank (1), and
- the spacing between the two annular projections (10, 11, 13, 14, 16, 20) of the pair differs along the circumference, or both annular projections (19) of the pair of annular projections are arranged parallel to one another.

2. Connecting element according to claim 1, in which the front end (7) of the shank (1) is of blunt design.

3. Connecting element according to claim 1, in which the front end of the shank (1) is of tapering design, in particular is designed as a ballistic, if appropriate rounded, tip (25).

4. Connecting element according to claim 2 or 3, in which a sizing zone (8) adjoins the front end of the shank (1).

5. Connecting element according to any of the preceding claims, in which the shank (1) has an application zone (6).

6. Connecting element according to any of the preceding claims, in which the shank cross section is of circular and/or polygonal design, wherein the holding portion (5, 15) has the circular cross section in the case of a combination of a circular and a polygonal design.

7. Connecting element according to any of the preceding claims, in which the shank (1) is of cylindrical and/or conical design, wherein the holding portion (5, 15) is cylindrical in the case of a combination of a cylindrical and a conical design.

8. Connecting element according to any of the preceding claims, in which at least one annular projection (9, 13, 20) lies in a plane extending perpendicularly to the longitudinal axis of the connecting element.

9. Connecting element according to any of the preceding claims, in which at least one annular projection (10) lies in a plane extending obliquely to the longitudinal axis of the connecting element.

10. Connecting element according to any of the preceding claims, in which at least one annular projection (14) is of undulating design.

11. Connecting element according to any of the preceding claims, in which at least one annular projection (16) has two parts offset in a step-like manner, which, in particular, each lie in a plane extending perpendicularly to the longitudinal axis of the fastening element.

12. Connecting element according to any of the preceding claims, in which the flank profile of at least one annular projection in the holding portion is of symmetrical design.

13. Connecting element according to any of the preceding claims, in which the flank profile of at least one annular projection in the holding portion is of asymmetrical design, wherein the flank (20) facing the connecting element head (2) is preferably closer to a plane transverse to the longitudinal axis of the connecting element.

14. Connecting element according to any of the preceding claims, in which the flank profile of at least one annular projection in the holding portion has a rounded cross section.

15. Use of a connecting element according to any of the preceding claims for connecting at least two workpieces to one another by pushing the connecting element in axially until the underside (3) of the connecting element head (2) is in contact and then twisting to lock.

16. Method for connecting at least two workpieces to one another, in which the workpieces are placed one on top of the other and a connecting element according to any of claims 1 to 14 is pushed in axially, until the underside (3) of the connecting element head (2) rests on the outer workpiece, after which the fastening element is twisted to lock.

17. Method according to claim 16, in which, for connection to a workpiece perforated in the connecting region, the connecting element is pushed in axially, until the connecting element head (2) is in contact, and is then twisted to lock.

18. Method according to claim 16, in which, for connection to a workpiece unperforated in the connecting region, the connecting element is rotated under an axial contact pressure and with a high speed, until a hole and, if appropriate, a rim are produced, and is then pressed in axially, while reducing the speed, until the connecting element head (2) is resting on the workpiece, and is then twisted to lock.

## Revendications

1. Élément de liaison pour le raccordement d'au moins deux pièces l'une à l'autre, comprenant
- une tige (1),
- une tête d'élément de liaison (2) faisant saillie radialement au-delà du côté extérieur de la tige (1), à l'une des extrémités de la tige (1),
- un entraînement en rotation au niveau de la tête d'élément de liaison (2) et
- une extrémité de tige avant (7),
- une paire de saillies annulaires fermées (10, 11, 13, 20) étant prévues sur la tige dans une portion de retenue (5, 15) de la tige (1) partant du côté inférieur (3) de la tête d'élément de liaison (2),
- dont au moins une saillie annulaire (10, 14, 16) n'est pas disposée complètement dans un plan s'étendant perpendiculairement à l'axe longitudinal de la tige (1), et
- dont la distance entre les deux saillies annulaires (10, 11, 13, 14, 16, 20) de la paire le long de la périphérie est différente ou dont les deux saillies annulaires (19) de la paire de saillies annulaires sont disposées parallèlement l'une à l'autre.

2. Élément de liaison selon la revendication 1, dans lequel l'extrémité avant (7) de la tige (1) est réalisée sous forme émoussée.

3. Élément de liaison selon la revendication 1, dans lequel l'extrémité avant de la tige (1) est réalisée sous forme effilée, en particulier sous forme de pointe (25) bombée, et éventuellement arrondie.

4. Élément de liaison selon la revendication 2 ou 3, dans lequel une zone d'étalonnage (8) est raccordée à l'extrémité avant de la tige (1).

5. Élément de liaison selon l'une quelconque des revendications précédentes, dans lequel la tige (1) présente une zone d'application (6).

6. Élément de liaison selon l'une quelconque des revendications précédentes, dans lequel la section transversale de la tige est réalisée sous forme ronde circulaire et/ou polygonale, la portion de retenue (5, 15), dans le cas d'une combinaison d'une section transversale ronde circulaire et polygonale, présentant la section transversale ronde circulaire.

7. Élément de liaison selon l'une quelconque des revendications précédentes, dans lequel la tige (1) est réalisée sous forme cylindrique et/ou conique, la portion de retenue (5, 15), dans le cas d'une combinaison d'une forme cylindrique et conique, présentant une forme cylindrique.

8. Élément de liaison selon l'une quelconque des revendications précédentes, dans lequel au moins une saillie annulaire (9, 13, 20) est située dans un plan s'étendant perpendiculairement à l'axe longitudinal de l'élément de liaison.

9. Élément de liaison selon l'une quelconque des revendications précédentes, dans lequel au moins une saillie annulaire (10) est située dans un plan s'étendant obliquement par rapport à l'axe longitudinal de l'élément de liaison.

10. Élément de liaison selon l'une quelconque des revendications précédentes, dans lequel au moins une saillie annulaire (14) est réalisée sous forme ondulée.

11. Élément de liaison selon l'une quelconque des revendications précédentes, dans lequel au moins une saillie annulaire (16) présente deux parties décalées sous forme étagée, qui sont notamment chacune situées dans un plan s'étendant perpendiculairement à l'axe longitudinal de l'élément de fixation.

12. Élément de liaison selon l'une quelconque des revendications précédentes, dans lequel le profil des flancs d'au moins une saillie annulaire est réalisé de manière symétrique dans la portion de retenue.

13. Élément de liaison selon l'une quelconque des revendications précédentes, dans lequel le profil des flancs d'au moins une saillie annulaire dans la portion de retenue est réalisé de manière asymétrique, le flanc (20) tourné vers la tête d'élément de liaison (2) étant de préférence situé plus près d'un plan transversal à l'axe longitudinal de l'élément de liaison.

14. Élément de liaison selon l'une quelconque des revendications précédentes, dans lequel le profil des flancs d'au moins une saillie annulaire dans la portion de retenue présente une section transversale arrondie.

15. Utilisation d'un élément de liaison selon l'une quelconque des revendications précédentes pour le raccordement d'au moins deux pièces l'une à l'autre par insertion axiale de l'élément de liaison jusqu'à ce que le côté inférieur (3) de la tête d'élément de liaison (2) vienne en butée, puis par rotation subséquente pour réaliser le verrouillage.

16. Procédé pour le raccordement d'au moins deux pièces l'une à l'autre, dans lequel les pièces sont placées l'une sur l'autre et un élément de liaison selon l'une quelconque des revendications 1 à 14 est enfoncé axialement jusqu'à ce que le côté inférieur (3) de la tête d'élément de liaison (2) vienne en butée contre la pièce extérieure, après quoi l'élément de fixation est tourné pour réaliser le verrouillage.

17. Procédé selon la revendication 16, dans lequel, pour le raccordement à une pièce perforée dans la zone de liaison, l'élément de liaison est enfoncé axialement jusqu'à ce que la tête d'élément de liaison (2) vienne en butée, puis est tourné pour réaliser le verrouillage.

18. Procédé selon la revendication 16, dans lequel, pour le raccordement à une pièce non perforée dans la zone de liaison, l'élément de liaison est tourné à grande vitesse avec une force de pressage axiale jusqu'à ce qu'un trou et éventuellement un passage soit produit, puis est pressé axialement tout en réduisant la vitesse de rotation jusqu'à ce que la tête d'élément de liaison (2) vienne en appui contre la pièce et est enfin tourné pour réaliser le verrouillage.
